(19) Europäisches Patentamt
European Patent Office
Office européen des brevets

(11) Publication number: **0 473 038 A1**

(12) **EUROPEAN PATENT APPLICATION**

(21) Application number: **91113848.5**

(51) Int. Cl.$^5$: **C08L 81/02**, C08L 77/02

(22) Date of filing: **19.08.91**

(30) Priority: **20.08.90 US 570182**

(43) Date of publication of application:
**04.03.92 Bulletin 92/10**

(84) Designated Contracting States:
**AT BE CH DE DK ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Yu, Michael Chen-Cheu**
**208 NE Spruce Avenue**
**Bartlesville, OK 74006(US)**
Inventor: **Beever, William, Herbert**
**Rural Route No 2, Box 2670**
**Bartlesville, OK 74006(US)**

(74) Representative: **Geissler, Bernhard, Dr. jur.,**
**Dipl.-Phys. Patent- und Rechtsanwälte et al**
**Bardehle-Pagenberg-Dost-**
**Altenburg-Frohwitter-Geissler & Partner**
**Postfach 86 06 20**
**W-8000 München 86(DE)**

(54) **Poly(arylene sulfide) composition having strengths and methods.**

(57) A poly(arylene sulfide)/polyamide composition having improved impact strength is provided by the employment of a sufficient amount of a polyolefin elastomer and a carboxylic acid anhydride.

EP 0 473 038 A1

## Background of the Invention

### Field of the Invention

The present invention relates to poly(arylene sulfide) compositions having improved impact strengths, methods of preparing the compositions and molded products formed from the compositions.

### Description of the Prior Art

Poly(arylene sulfide) resin compositions have achieved wide acceptance as thermoplastic materials having excellent chemical, heat and electrical insulation resistance as well as superior rigidity compared to other thermoplastic materials. In some applications, however, impact resistances higher than those heretofore achievable by poly(arylene sulfide) compositions are required. For example, high impact resistances combined with other good mechanical properties are required for certain automotive applications, e.g., intake manifolds and other under-the-hood mechanical components.

A number of additives for improving the mechanical properties of poly(arylene sulfide) resin compositions have been proposed which have achieved varying degrees of success. For example, reinforcement materials such as glass fibers and coupling agents have been incorporated in the resin compositions to improve impact strengths and other properties. In addition, some blends of poly(arylene sulfide) and polyamide have been made in an attempt to obtain a blend of the beneficial characteristics of the individual polymers. However, it has been found difficult to obtain blends of PAS which are sufficiently compatible to yield products have properties that are desirable for a wide range of applications. One example where it has been difficult involves forming blends of PAS and polyamides.

An object of the present invention is to provide poly(arylene sulfide)/polyamide blends which have improved impact strengths when molded, methods of producing such compositions and molded products formed of the compositions.

Another object of the present invention is to provide poly(arylene sulfide)/polyamide compositions having improved impact strengths and methods of producing such compositions.

A further object of the present invention is the provision of molded products formed of poly(arylene sulfide) compositions having improved impact strengths.

Other and further objects, features and advantages of the present invention will be readily apparent to those skilled in the art upon a reading of the description of preferred embodiments which follows.

## Summary of the Invention

In accordance with the present invention a poly(arylene sulfide) composition is provided comprising (1) a resin matrix consisting essentially of a blend of a poly(arylene sulfide) resin and a polyamide resin and (2) an impact strength improving amount of an impact strength improver resulting from the combination of a polyolefin elastomer and at least one carboxylic acid anhydride.

The compositions are each basically comprised of a poly(arylene sulfide) resin, a polyamide resin, a polyolefin elastomer and a carboxylic anhydride. Preferred poly(arylene sulfide) resins are poly(phenylene sulfide) resins and poly(phenylene sulfide/sulfone) resins. Preferred polyamide resins are poly-(hexamethylenediamine-co-adipic acid) and polycaprolactum. Preferred polyolefin elastomers are ethylene-propylene rubber and ethylene-propylene terpolymer, and preferred carboxylic anhydrides are maleic anhydride, nadic anhydride and derivatives thereof.

The compositions are prepared by combining a poly(arylene sulfide) resin, polyamide resin, a polyolefin elastomer and a carboxylic anhydride to form a mixture thereof. The mixture is then melt blended. This can be accomplished by passing the mixture through an extruder at a temperature above the melting point of the highest melting resin in the resin matrix. The term "resin matrix" is used herein to define the combination of the poly(arylene sulfide) resin and the polyamide resin. Molded products formed of the compositions have improved impact strengths.

In a preferred embodiment the poly(arylene sulfide) resin comprises a poly(phenylene sulfide) resin which includes polyvalent metal cations.

## Detailed Description

The poly(arylene sulfide) compositions having improved impact strengths of this invention are each comprised of at least one poly(arylene sulfide) resin, at least one polyamide resin, at least one polyolefin

elastomer and at least one carboxylic anhydride. The compositions can optionally contain reinforcement materials as well as other additives such as plasticizers, pigments, mold release agents, anti-oxidants, etc.

The Poly(arylene sulfide) Resins

The term "poly(arylene sulfide) resin", also PAS, is used herein to broadly designate arylene sulfide polymers whether homopolymers, copolymers, terpolymers, and the like, or a blend of such polymers. Poly(arylene sulfide) resins which are suitable for use in accordance with the present invention are those described in United States Patents Nos. 3,354,129 issued November 21, 1967; 4,415,729 issued November 15, 1983; 4,588,789 issued May 13, 1986; 3,919,177 issued November 11, 1975; 4,038,261 issued July 26, 1977; and 4,656,231 issued April 7, 1987, which patents are incorporated herein by reference. Of the various poly(arylene sulfide) resins which can be utilized, poly(phenylene sulfide) resins and poly(phenylene sulfide/sulfone) resins are most preferred. The preferred commercially available poly(phenylene sulfide) resins are those manufactured by Phillips Petroleum Company of Bartlesville, Oklahoma, and marketed as RYTON® poly(phenylene sulfide) resins having flow rates in the range of from about 0.1 to about 500 grams per 10 minutes as determined by ASTM D1238, procedure B, condition 315/5.0.

Poly(phenylene sulfide/sulfone) resins are specifically described in United States Patent No. 4,016,145 issued April 5, 1977 and United States Patent No. 4,127,713 issued November 28, 1978, which patents are incorporated herein by reference. The preferred commercially available poly(phenylene sulfide/sulfone) resins are those manufactured by Phillips Petroleum Company and marketed as RYTON® S poly-(phenylene sulfide/sulfone) resins having flow rates in the range of from about 0.1 to about 500 grams per 10 minutes as determined by ASTM D1238, procedure B, condition 343/5.0.

Particularly beneficial effects have been noted when the poly(phenylene sulfide) resin is one which contains alkali metal or polyvalent metal cations as a result of having been washed with a solution of alkali metal or polyvalent metal ions.

As a general rule, the poly(arylene sulfide) resin is one which results from a polymerization phase and a recovery phase, and optionally a washing phase which follows the recovery phase. In the polymerization phase polyhalo-substituted aromatic compounds are reacted with sulfur-containing reactants in a polar organic solvent to produce the resin. By way of a representative example, the polymer can be prepared by reacting an approximately 50% by weight sodium hydroxide aqueous solution with an approximately 60% by weight NaSH aqueous solution to produce an aqueous sodium sulfide solution. A quantity of N-methyl-2-pyrrolidone (NMP) is added to the aqueous sodium sulfide solution and the resulting solution is dehydrated in a known manner to produce the following solution:

$(Na_2S \bullet NMP \bullet H_2O) + 2NMP$

To this solution, a suitable modifier or phase transfer agent can be added. In a particularly preferred embodiment about 0.3 moles of sodium acetate per mole of $Na_2S$ is added to produce a reaction mixture to which a suitable amount of dichlorobenzene (preferably para-dichlorobenzene) is added. The resulting reaction mixture is polymerized preferably by two sequential heating cycles to produce a reaction mixture containing poly(para-phenylene sulfide) resin, a PPS resin.

It is currently believed that the use of the two sequential heating cycles produces an apparent increase in the linear molecular weight of the PPS produced from the aforementioned polymerization.

In a preferred embodiment the first of the two heating cycles is at a first temperature, and the second cycle is at a higher temperature. The second, higher temperature cycle is performed immediately after completion of the lower temperature cycle. During the lower temperature cycle, the reaction mixture is heated to a temperature within the range of from about 400°F to about 460°F for a time period within the range of about 1 hour to about 6 hours. More preferably, this heating is at a temperature within the range of from about 400°F to about 440°F for a time period within the range of from about 3 hours to about 4 hours, and even more preferably the heating occurs at about 440°F for about 4 hours. In a preferred embodiment the higher temperature cycle is performed so that the reaction mixture is heated to a temperature within the range of from about 500°F to about 520°F for a time period within the range of from about 1 hour to about 4 hours. More preferably, the heating during the higher temperature cycle is performed at a temperature of about 510°F for about 3 hours. After the performance of these two heating cycles, the reaction mixture contains liquid high molecular weight, linear PPS dispersed in NMP.

After the polymerization it is desirable to recover the high molecular weight linear poly(arylene sulfide) resin in a solidified form for ease in removing any by-products. Also, it is the solidified form of the PAS which is typically used in producing articles of manufacture, such as in this case the blends of the present

invention. The recovery of the PAS from the polymerization mixture can be performed by any suitable technique which does not degrade the polymer. Currently three techniques are preferred.

One preferred method, includes flash recovering high molecular weight linear PAS. The preferred flash recovery is referred to as non-vent flash recovery. It is commenced after the polymerization without venting the pressure of the reaction vessel where the polymerization was performed. The temperature is increased above the polymerization temperature to start the non-vent flash recovery, and then the reaction mixture is flashed to a vessel at a lower temperature and pressure (such as a ribbon blender at 460° F and 0.02 psig which is purged with nitrogen). As a result of this non-vent flash recovery the polymer is recovered in a solidified form.

Another recovery technique is referred to herein as NMP quench recovery. This technique broadly includes: (a) sequentially solidifying high molecular weight then low molecular weight linear PAS from the reaction mixture including high molecular weight and low molecular weight PAS by controlled cooling; (b) redissolving low molecular weight linear PAS; and (c) filtering solidified high molecular weight linear PAS from the reaction mixture. In the NMP quench recovery for the previously described particular polymerization example wherein liquid molecular weight, linear PPS was produced, the reaction mixture from the polymerization after being polymerized at a temperature of about 510° F can be cooled at about 3° F per minute to about 470° F and then cooled at about 1° F per minute to about 400° F. At approximately 425° F, the high molecular weight, linear PPS solidifies into a granular form. Further cooling is continued to reduce pressure within the vessel in which the foregoing processing is done. At about 250° F, low molecular weight species of PPS, referred to often as oligomers, solidify and the remaining liquid tends to become very viscous. To lower the viscosity for facilitating filtering, an appropriate polar organic compound such as NMP is added in large quantities, such as about 3 to about 5 moles per mole of sulfur present. The use of the large amounts of NMP has been found to redissolve solidified oligomers so that the solid PPS that is recovered will contain substantially less of the lower molecular weight oligomers. The separation of the solid from the liquid can be carried out using any suitable known procedure such as screening, centrifuging, or filtration.

The third recovery technique is analogous to the NMP quench technique except that water rather than NMP is used for diluting the reaction mixture.

The PAS particles even after separation from the reaction mixture tend to retain some of the filtrate. If this is to be removed the solid then needs to be processed through a washing step. The washing step can be carried out in any suitable manner. It has been discovered, however, that certain types of washing steps improve characteristics to the recovered PAS resin. Some examples of processes in which washing improves the characteristics of PAS resins are disclosed in U.S. Patents 4,588,789; 4,801,664; and 4,877,850, the disclosures of which are incorporated herein by reference. One technique of washing involves the employment of an aqueous acidic treating solution such as disclosed in U.S. 4,801,664. Another technique involves merely water washing. Still another technique involves washing with aqueous solutions of the metal salts, oxides, or hydroxides of groups I and IIA of the Periodic Table, such as disclosed in U.S. 4,588,789. It is also within the scope of the present invention to carry out the washing by the use of several of these techniques in sequence, for example, a water wash followed by an aqueous acidic wash followed by a wash with an aqueous alkali metal ion containing solution, and finally with an aqueous solution of a polyvalent metal cation selected from the group consisting of calcium, magnesium, and zinc. In fact, it has been discovered that the greatest improvements in impact strength which have been observed by the use of the meleated olefin and elastomer in the present invention has been obtained using poly(arylene sulfide) resins in which the final wash employed an aqueous solution containing a polyvalent cation selected from the group consisting of calcium, magnesium, and zinc.

## The Polyamides

The term polyamide refers to polymers that contain recurring amide groups as integral parts of the main polymer chain. Examples would include polymers having repeating units of the formula

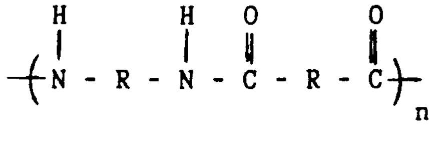

where each R is independently selected from alkylene radical having 1 to about 30 carbons, or cycloalkylene or arylene radicals having about 3 to about 30 carbon atoms. Some specific examples of polyamides include poly(hexamethylenediamine-co-adipic acid), sometimes also referred to as nylon-6,6; polycaprolactom, also sometimes referred to as nylon-6; poly(tetramethylenediamine co-adipic acid), also known as nylon-4,6; poly(hexamethylenediamine-co-dodecanedioc acid), also known as nylon-6,12; polyprrolidinone, also known as nylon-4; poly(w-enantholactam), also known as nylon-7; poly(capryllactam), also known as nylon-8; poly(w-aminoundecanoic acid), also known as nylon-11, poly(w-dodecanolactam), also known as nylon-12; poly(tetramethylenediamine-co-oxalic acid), also known as nylon-4,2; poly(hexamethylenediamine-co-terephthalic acid, also known as nylon-6,T; poly(tetramethylenediamine-co-isophthalic acid, also known as nylon 4, I; poly(5-methylnonamethylenediamine-co-terephthalic acid), poly(p-phenylenediamine-co-terephthalic acid), and poly(5-methylnonmethylenediamine/2,4-dimethyloctamethylene diamine/2,4,6-trimethyl heptamethylenediamine-co-terephthalic acid), poly[2,2-bis(4-aminocyclohexylpropane/azelamide-co-adipamide), also known as Nylon PACP 9,6, such as disclosed in U.S. Patent No. 4,292,416; and the like.

Polyamides which are preferred for use in the present invention include those conventional and well-known nylon and polyamide resins having recurring amide groups as integral parts of a molecular chain structure characterized by amide links and hydrocarbon links along the chain. Typical of these polyamides is the product commercially known as nylon 6 which is obtained by the polymerization of caprolactam. Another typical polyamide is that obtained by the condensation of a dibasic acid (e.g. adipic acid, sebacic acid, terephthalic acid) and a diamine (e.g. hexamethylenediamine, 1,12-dodecane diamine). High crystallinity (40-60%) can be obtained with nylon-6,6, -6,10, and -6 whose regular structures permit good chain alignment and a high degree of hydrogen bonding.

Especially suitable in the present invention are those polyamides prepared from adipic acid and hexamethylenediamine. This produces poly(hexamethylenediamine-co-adipic acid) commercially known as nylon 6,6. Typically, nylon-6,6 polymer has a number-average molecular weight of 12,000-20,000. The viscosity of linear nylon melts is a function of molecular weights and in the Newtonian Sheer-rate region (shear stresses less than about 30 KPa), melt viscosities lie in the range of 40-1000 Pa's (400-10,000 P).

## The Polyolefin Elastomers

A variety of polyolefin elastomers in addition to ethylene-propylene rubber and ethylene-propylene terpolymer (referred to by the abbreviations EPR and EPDM) can be utilized in accordance with the present invention. Generally such elastomers are homopolymers or copolymers derived from alpha-olefins such as ethylene, propylene, butene, isobutene, pentene, methylpentene, hexene, etc. Ethylene-propylene rubber and ethylene-propylene terpolymer are preferred for use in accordance with this invention with ethylene-propylene terpolymer being the most preferred.

The term ethylene-propylene terpolymer (EPDM) refers to copolymer of ethylene, propylene and at least one non-conjugated diene. The preferred non-conjugated dienes used in making the EPDM are linear aliphatic dienes of at least six carbon atoms which have one terminal bond and one internal double bond and cyclic dienes wherein one or both of the carbon-to-carbon double bonds are part of a carboxylic ring. Elastomeric, i.e. rubbery terpolymer of ethylene, propylene, and 1,4-hexadiene are particularly preferred. Details for the preparation of such EPDM elastomers is disclosed in U.S. Patent Nos. 2,933,480; 2,962,451; 3,000,866; 3,093,620; and 3,260,708, the disclosures of which are incorporated herein by reference.

## The Unsaturated Anhydrides

Carboxylic anhydrides which can be used are those having both a double bond and an anhydride group. Such compounds include compounds such as maleic anhydride, itaconic anhydride, chloromaleic anhydride, citracinic anhydride, butenyl-succinic anhydride, tetrahydrophthalic anhydride, and nadic anhydride. Derivatives of the foregoing compounds are also suitable, for example, the methyl nadic anhydride derivative of nadic anhydride.

The compositions of the present invention can optionally include reinforcement material, e.g., glass, carbon or aramid fibers or the like. Glass reinforcement material is preferred with glass fibers being the most preferred. The reinforcement material can be included in the above described compositions in amounts generally up to about 70% by weight, more typically from 0% to about 60% by weight. The term "% by weight" used here refers to the weight percent of one component in a composition based on the total weight of all of the components in the composition.

The weight ratio of the polyarylene sulfide resin to the polyamide in the resin matrix can vary over a

wide range. It has been noted that as the level of polyarylene sulfide resin decreases the effect of the impact strength improver decreases. Generally, therefore, this invention is most advantageous where the polyarylene sulfide accounts for at least about 50 weight percent of the resin matrix. A representative weight ratio of the PAS to the polyamide would be about 50:50 to about 99.9:0.1. More generally the invention would be useful for a resin matrix in which the weight ratio of the polyarylene sulfide to the polyamide is in the range of about 50:50 to about 90:10. Particularly significant improvements have been obtained when the weight ratio of the PAS to the polyamide was greater than 50:50, i.e. 70:30 or higher.

The amount of polyolefin elastomer employed in the present invention can vary over a wide range. Any amount which in combination with the anhydride provides an impact strength improvement would be suitable. As a general rule the polyolefin would be used in an amount equal to about 3 to about 70, more typically about 10 to about 50 weight percent based on the weight of the resin matrix.

The amount of unsaturated carboxylic acid anhydride employed in the present invention can also vary widely. Typically, the anhydride would be used in an amount sufficient to improve the impact strength beyond the improvement that would be provided if the polyolefin elastomer had been used without the anhydride. For example, the anhydrides should be used in an amount in the range of about 0.001 to about 10 weight percent, based on the weight of the resin matrix. Typically amounts of anhydride in the range of about 0.1 to about 10, more preferably about 0.1 to about 5 weight percent would be employed, where the weight percent is based upon the weight of the resin matrix.

A particularly preferred composition of the present invention is comprised of a resin matrix containing a poly(arylene sulfide) resin selected from the group consisting of poly(phenylene sulfide) and a polyamide resin selected from the group consisting of poly(hexamethylemediamine-co-adipic acid) and polycaprolactum present in a weight ratio greater than 50/50, i.e. from about 60:40 to about 99:1. The composition further comprises a polyolefin elastomer selected from the group consisting of ethylene-propylene rubber and ethylene-propylene terpolymer present in an amount in the range of from about 10 to about 30 weight percent and a carboxylic anhydride selected from the group consisting of maleic anhydride, nadic anhydride and derivatives thereof present in an amount in the range of from about 0.05 to about 2 weight percent, where said weight percentages are based on the weight of the resin matrix. If reinforcement material is utilized in the composition, it is preferably glass fibers present in the composition in an amount up to about 50% by weight.

The most preferred poly(arylene sulfide) composition of the present invention having improved impact strength when molded is comprised of a resin matrix containing poly(phenylene sulfide) resin and poly-(hexamethylenediamine-co-adipic acid) present in a ratio from about 70:30 to about 90:10. The composition further comprises ethylene-propylene terpolymer present in an amount from about 10 parts to about 30 parts and maleic anhydride present in an amount from about 0.1 parts to 1.0 parts, where the resin matrix is present in an amount of about 100 parts in the composition.

As mentioned above, the compositions can include other additives including, but not limited to, pigments such as carbon black, mold corrosion inhibitors such as hydrotalcite and processing aids such as high density polyethylene.

A composition of this invention having improved impact strength when molded is prepared by combining the poly(arylene sulfide) resin with the polyamide resin, the polyolefin elastomer, and carboxylic anhydride to form a mixture thereof. The poly(arylene sulfide) resin is preferably dried prior to use in a forced air oven at a temperature in the range of from about 100°C to about 140°C for a time period of about 8 hours.

Many suitable methods of combining the components are well known to those skilled in the art. For example, the components can be mixed together at room temperature in a rotating drum blender, or in an intensive mixer such as a Henschel mixer, to form a homogeneous mixture of the components. The homogeneous mixture is then melt blended by heating the mixture to a temperature preferably above the melting point of the highest melting resin in the resin matrix and subjecting the mixture to further blending. A particularly suitable technique for melt blending the mixture is to pass the mixture through an extruder at a temperature in the range of from about 300°C to about 330°C. The extrudate can be pelletized or formed into strands, sheets or tapes whereby it can best be used for forming molded products therefrom, e.g., by injection molding, press molding, etc.

The following example is presented to further illustrate the compositions and methods of the invention. The particular species and conditions employed in the example are intended to be illustrative of the invention and not limiting thereto.

Example

Various compositions of the present invention were prepared using Phillips Petroleum Company RYTON® poly(phenylene sulfide) resins having flow rates of 55 grams per 10 minutes and 66 grams per 10 minutes, respectively. The other components utilized in the compositions were poly(hexamethylenediamine-co-adipic acid), (Zytel 101 from DuPont), ethylene-propylene terpolymer, (Nordel 5501 obtained from R.T. Vanderbilt Company, Inc. of Norwalk, Connecticut), and maleic anhydride.

The poly(phenylene sulfide) resins were dried in a forced air oven at about 120°C for about 4 hours before mixing. The dry components were tumble blended in plastic bags followed by melt blending in a 30mm corotating Werner-Pfleiderer twin screw extruder with an open vent and pelletizer at from about 310°C to about 320°C. The pellets produced were molded in an Arburg 305 ECO or ENGEL injection molding machine using a barrel temperature of about 316°C and a mold temperature of 38°C. Test specimens formed of the compositions were tested for Izod impact strength as determined by ASTM D-256 for both notched and unnotched specimens. The results of these tests are shown in Table I below.

Table I

| | Composition | | | | | | | |
|---|---|---|---|---|---|---|---|---|
| Component, parts | A | B | C | D | E | F | G | H |
| PPS | 10 | 10 | 50 | 50 | 70 | 70 | 90 | 90 |
| Zytel 101 (Nylon) | 90 | 90 | 50 | 50 | 30 | 30 | 10 | 10 |
| Nordel 5501 | | 25 | | 25 | | 25 | | 25 |
| Maleic anhydride | | 0.5 | | 0.5 | | 0.5 | | 0.5 |

MECHANICAL PROPERTIES

| Izod Impact Strength (ft-lb/in) | | | | | | | | |
|---|---|---|---|---|---|---|---|---|
| Notched-unannealed | 0.54 | 0.55 | 0.25 | 0.43 | 0.18 | 0.75 | 0.26 | 1.73 |
| -annealed | not | tested | 0.29 | 0.39 | 0.25 | 0.53 | 0.23 | 0.75 |
| Unnotched-unannealed | 11.8 | 7.98 | 6.18 | 6.59 | 6.56 | 10.63 | 8.97 | NB |
| -annealed | not | tested | 1.98 | 1.9 | 4.87 | 9.74 | 7.85 | 15.77 |

*PPS - is calcium washed and NMP quenched, poly(phenylene sulfide) resin. Compositions A and B used PPS having a flow rate of about 55. The remaining compositions used PPS having a flow rate of about 66.

From Table I it can be seen that the compositions of this invention containing ethylene-propylene terpolymer elastomer and maleic anhydride exhibited significantly improved impact strengths as the the level of washed PPS increased in the PPS/Nylon resin matrix. The level of improvement is particularly noticeable in runs F and H. Even at a PPS to polyamide weight ratio of 50/50 some improvement in impact

strength was provided by the EPDM maleic anhydride combination.

**Claims**

1. A poly(arylene sulfide) composition comprising (1) a resin matrix consisting essentially of a blend of a poly(arylene sulfide) resin and a polyamide resin and (2) an impact strength improving amount of an impact strength improver resulting from a combination of a polyolefin elastomer and at least one unsaturated carboxylic acid anhydride.

2. A composition according to claim 1, wherein the weight ratio of poly(arylene sulfide) resin to the polyamide resin is at least about 50:50, in particular is in the range of about 50:50 to about 99.9:0.1, more particular wherein the weight ratio of poly(arylene sulfide) resin to the polyamide resin is at least about 70:30.

3. A composition according to claim 2, wherein the polyolefin elastomer is present in an amount in the range of about 3 to about 70 weight-% and the unsaturated carboxylic acid anhydride is present in an amount in the range of about 0.001 to about 10 weight-%, in particular wherein the polyolefin elastomer is present in an amount in the range of about 10 to about 30 weight-% and the anhydride is present in an amount in the range of about 0.1 to about 5 weight-%, said percentages being based on the weight of the resin matrix.

4. A composition according to claim 3, wherein said poly(arylene sulfide) is poly(phenylene sulfide) and said polyamide is selected from poly(hexamethylenediamine-co-adipic acid) and poly(caprolactam), in particular wherein said polyamide consists essentially of poly(hexamethylenediamine-co-adipic acid).

5. A composition according to claim 4, wherein said polyolefin elastomer is ethylene propylene diene terpolymer.

6. A composition according to claim 5, wherein said anhydride is selected from maleic anhydride and nadic anhydride, in particular wherein said anhydride consists essentially of maleic anhydride.

7. A composition according to claim 6, wherein said poly(phenylene sulfide) is prepared by washing with a protonic acid and subsequently with a solution containing polyvalent cation selected from the group consisting of magnesium, calcium and zinc, in particular wherein said poly(phenylene sulfide) is prepared by washing with a solution of calcium acetate.

8. A composition according to claim 7, wherein the polyolefin elastomer is present in an amount in the range of about 10 to about 30 weight-% and the anhydride is present in an amount in the range of about 0.1 to about 5 weight-%, said weight percentages being based upon the weight of said resin matrix.

9. A molded product formed from the composition of one of the preceding claims.

European Patent Office

# EUROPEAN SEARCH REPORT

Application Number

EP 91113848.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A - 0 345 094 (TORAY INDUSTRIES INC) * Examples; claims * -- | 1-6,8, 9 | C 08 L 81/02<br>C 08 L 77/02 |
| P,A | EP - A - 0 388 970 (PHILLIPS PETROLEUM COMPANY) * Examples; claims * -- | 1-6,8, 9 | |
| P,A | EP - A - 0 394 933 (TORAY INDUSTRIES INC) * Examples; claims * ---- | 1-6,8, 9 | |

TECHNICAL FIELDS SEARCHED (Int. Cl.5)

C 08 L 21/00
C 08 L 77/00
C 08 L 23/00

The present search report has been drawn up for all claims

| Place of search | Date of completion of the search | Examiner |
|---|---|---|
| VIENNA | 02-12-1991 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document